# FASCICULE DE BREVET EUROPEEN

(11) **EP 3 534 062 B1**
(45) Date de publication et mention de la délivrance du brevet: **19.08.2020**
(21) Numéro de dépôt: 19157066.2
(22) Date de dépôt: 14.02.2019
(51) Int. Cl.: F21S 43/237, F21S 43/239, F21S 43/243, F21S 43/37, F21S 43/50, F21S 41/29, F21S 41/24, B60Q 1/00, F21S 43/19, F21S 43/14, F21Y 107/90

(54) **DISPOSITIF D'ÉCLAIRAGE POUR VÉHICULE COMPRENANT UN MASQUE À NERVURES POUR LA LIMITATION DE SORTIE DE PHOTONS ENTRE DE GUIDES DE LUMIÈRE**
BELEUCHTUNGSVORRICHTUNG FÜR EIN FAHRZEUG MIT EINER GERIPPTEN MASKE ZUR BEGRENZUNG DES AUSTRITTS VON LICHTSTRAHLEN ZWISCHEN LICHTLEITERN
LIGHTING DEVICE FOR A VEHICLE COMPRISING A MASK WITH RIBS FOR LIMITING LIGHT RAYS OUTPUT BETWEEN LIGHT GUIDES

(30) Priorité: 01.03.2018 FR 1851799
(43) Date de publication de la demande: 04.09.2019
(73) Titulaire: PSA Automobiles SA, 78300 Poissy (FR)
(72) Inventeur: ROYER, Guillaume, 91680 BRUYERES LE CHATEL (FR); CARROUGET, Alain, 28700 LEVAINVILLE (FR); ROSSO, Serge, 90100 ST DIZIER L EVEQUE (FR)

(56) Documents cités:
- EP-A1- 3 096 072
- EP-A1- 3 270 044
- EP-A2- 2 407 709
- WO-A1-2015/075668
- DE-A1-102015 006 258
- DE-A1-102015 216 413

## Description

L'invention concerne les véhicules, et plus précisément les dispositifs d'éclairage qui équipent les véhicules et qui assurent au moins deux fonctions photométriques, comme connu du document EP 2 407 709 A2.

Certains véhicules, généralement de type automobile, comprennent au moins un dispositif d'éclairage comportant une carte électronique, sur laquelle sont installées des première et seconde sources de photons, et des premier et second guides de lumière, placés de part et d'autre de la carte électronique. Ces premier et second guides de lumière sont alimentés en photons respectivement par les première et seconde sources de photons et délivrent sur leurs faces avant (orientées vers l'extérieur) respectivement des photons guidés qui participent à des première et seconde fonctions photométriques, par exemple choisies parmi une fonction de feu de stop, une fonction de feu de recul et une fonction d'indicateur de changement de direction (ou clignotant).

Un tel dispositif d'éclairage peut éventuellement constituer un bloc optique, et dans ce cas il comprend également un boîtier, délimitant un espace interne logeant la carte électronique, les première et seconde sources de photons et les premier et second guides de lumière, et une glace solidarisée fixement à la partie avant du boîtier, ou bien peut faire partie d'un bloc optique.

Très souvent, ce type de dispositif d'éclairage comprend également un masque comportant des première et seconde ouvertures traversées par les premier et second guides de lumière et séparées par une portion de paroi ayant une face arrière placée devant un côté de la carte électronique. Ce masque est généralement destiné à cacher (ou masquer) la partie technique inesthétique, et en particulier la carte électronique et les connecteurs et câbles électriques associés, et sa face avant, orientée vers l'extérieur, participe parfois au style.

Ce type de dispositif d'éclairage présente au moins un inconvénient. En effet, quelques photons se déplaçant dans le premier (ou second) guide de lumière peuvent sortir par une partie d'une face latérale située du côté de la face arrière du masque et en regard d'une face latérale du second (ou premier) guide de lumière. Le transfert de photons d'un guide de lumière (participant à l'une des fonctions photométriques) vers l'autre guide de lumière (non alimenté en photons par sa propre source de photons) peut alors donner l'impression que l'autre fonction photométrique a été activée mais fait l'objet d'un dysfonctionnement et/ou peut nuire à l'impression visuelle de qualité du véhicule. En outre, cela peut éventuellement nuire au style recherché.

Afin d'empêcher ce transfert de photons il est possible de rapporter des cloisons au voisinage des faces latérales en regard des premier et second guides de lumière. Mais la fixation de telles cloisons pose un problème et les vibrations et chocs subis par le véhicule peuvent induire des chocs entre ces cloisons et les premier et second guides de lumière ou la carte électronique, ce qui peut provoquer des bruits qui peuvent déranger et/ou inquiéter des passagers du véhicule, voire nuire à l'impression de qualité du véhicule.

L'invention a notamment pour but d'améliorer la situation.

Elle propose notamment à cet effet un dispositif d'éclairage, d'une part, destiné à équiper un véhicule, et, d'autre part, comprenant une carte électronique, sur laquelle sont installées des première et seconde sources de photons, et des premier et second guides de lumière, placés de part et d'autre de la carte électronique, alimentés en photons respectivement par les première et seconde sources de photons et délivrant sur des faces avant respectivement des photons guidés participant à des première et seconde fonctions photométriques.

Ce dispositif d'éclairage se caractérise par le fait qu'il comprend également un masque comprenant des première et seconde ouvertures traversées par les premier et second guides de lumière et séparées par une portion de paroi ayant une face arrière placée devant un côté de la carte électronique et munie de première et seconde nervures s'étendant de part et d'autre de la carte électronique entre une partie au moins de cette dernière et une partie au moins des premier et second guides de lumière, afin de limiter des transferts de photons entre ces derniers.

Ainsi, certains au moins des photons qui sortent par la face latérale d'un guide de lumière, orientée vers la carte électronique, sont réfléchis sensiblement vers cette même face latérale et donc peuvent de nouveau pénétrer dans ce guide de lumière.

Le dispositif d'éclairage selon l'invention peut comporter d'autres caractéristiques qui peuvent être prises séparément ou en combinaison, et notamment :
- les première et seconde nervures peuvent s'étendre de part et d'autre de la carte électronique sur toute une longueur des premier et second guides de lumière, parallèle à un grand côté de chacune des première et seconde ouvertures ;
- les première et seconde nervures peuvent s'étendre de part et d'autre de la carte électronique sur toute une hauteur de la partie des premier et second guides de lumière qui est située du côté de la face arrière ;
- sa carte électronique peut être logée étroitement et partiellement entre les première et seconde nervures afin d'être immobilisée par ces dernières ;
- son masque peut comprendre sur sa face arrière, le long d'une partie au moins d'un grand côté de chacune des première et seconde ouvertures, une nervure auxiliaire limitant une sortie de photons par une face latérale de l'un des premier et second guides de lumière située devant elle ;
   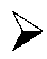 chacune des nervures auxiliaires peut s'étendre sur toute une longueur de l'un des grands côtés de chacune des première et seconde ouvertures ;
- chacune des première et seconde sources de photons peut comprendre au moins une diode électroluminescente ;
- chacun des premier et second guides de lumière peut être destiné à participer à une fonction photométrique choisie parmi une fonction de feu de stop, une fonction de feu de recul, une fonction d'indicateur de changement de direction et une fonction de feu de position latéral.

L'invention propose également un bloc optique destiné à équiper un véhicule et comprenant un boîtier délimitant un espace interne, une glace solidarisée fixement à une partie avant du boîtier, et un dispositif d'éclairage du type de celui présenté ci-avant et installé dans l'espace interne du boîtier.

Par exemple, ce bloc optique peut constituer un feu arrière de véhicule.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre de façon schématique et fonctionnelle, dans une vue très légèrement en perspective du côté arrière, une petite partie d'un exemple de bloc optique équipé d'un dispositif d'éclairage selon l'invention, et
- la figure 2 illustre de façon schématique et fonctionnelle, dans une autre vue en perspective du côté arrière, le masque du dispositif d'éclairage de la figure 1, avant son association aux premier et second guides de lumière et à la carte électronique.

L'invention a notamment pour but de proposer un dispositif d'éclairage DE destiné à équiper un véhicule afin d'assurer au moins deux fonctions photométriques ayant des fuites de lumière limitées.

Dans ce qui suit, on considère, à titre d'exemple non limitatif, que le dispositif d'éclairage DE est destiné à équiper un véhicule automobile. Mais l'invention n'est pas limitée à ce type de véhicule. Elle concerne en effet tout type de véhicule équipé d'au moins un dispositif d'éclairage DE devant assurer au moins deux fonctions photométriques.

Par ailleurs, on considère dans ce qui suit, à titre d'exemple non limitatif, que le dispositif d'éclairage DE est destiné à faire partie d'un bloc optique BO de véhicule. Mais cela n'est pas obligatoire. En effet, un dispositif d'éclairage DE, selon l'invention, peut éventuellement constituer un bloc optique, et dans ce cas il comprend également un boîtier délimitant un espace interne logeant ses constituants participant à la (chaque) fonction photométrique, et une glace solidarisée fixement à la partie avant du boîtier.

De plus, on considère dans ce qui suit, à titre d'exemple non limitatif, que le bloc optique est un feu arrière. Par exemple, ce feu arrière peut équiper une partie d'un hayon arrière de véhicule. Mais le bloc optique pourrait également être un feu avant de signalisation ou un phare (ou projecteur avant).

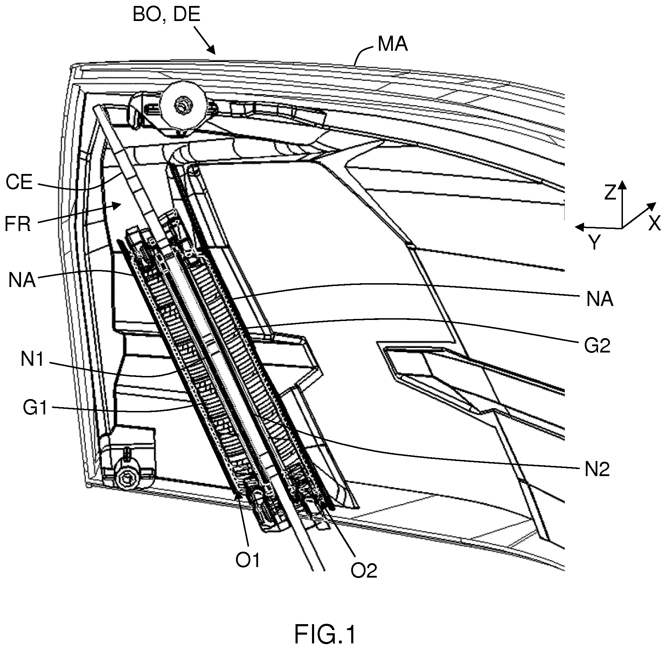

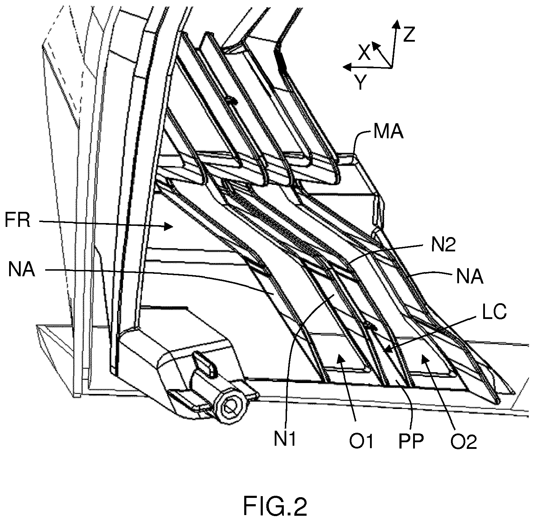

Sur les figures 1 et 2, la direction X est la direction longitudinale du véhicule V, laquelle est parallèle aux côtés latéraux comportant les portières latérales, la direction Y est la direction transversale du véhicule V, laquelle est perpendiculaire aux côtés latéraux et à la direction longitudinale X, et la direction Z est la direction verticale du véhicule V, laquelle est perpendiculaire aux directions longitudinale X et transversale Y.

On a schématiquement illustré sur la figure 1 une petite partie d'un exemple de bloc optique BO (ici un feu arrière) équipé d'un dispositif d'éclairage DE selon l'invention.

Bien que cela n'apparaisse pas sur la figure 1 le bloc optique BO comprend un boîtier, délimitant un espace interne logeant (ici) le dispositif d'éclairage DE, et une glace solidarisée fixement à une partie avant du boîtier.

La glace est solidarisée fixement (par exemple par collage ou soudage) et de façon étanche à la partie avant du boîtier. Elle peut être réalisée en matière plastique (ou synthétique) transparente ou bien en verre, et peut être éventuellement colorée au moins en partie, par exemple en rouge ou en orange.

Comme illustré partiellement sur la figure 1, un dispositif d'éclairage DE, selon l'invention, comprend au moins une carte électronique CE, des première et seconde sources de photons (non représentées), des premier G1 et second G2 guides de lumière, et un masque MA.

Les première et seconde sources de photons sont installées sur la carte électronique CE, de préférence sur deux faces opposées entre elles.

Cette carte électronique CE peut, par exemple, être une carte à circuits imprimés de type PCB (« Printed Circuit Board »).

Chacune des première et seconde sources de photons peut, par exemple, comporter au moins une diode électroluminescente (ou LED). En variante, la (chaque) source de photons peut comporter au moins une diode laser ou un laser à gaz ou encore une lampe (ou ampoule).

Les premier G1 et second G2 guides de lumière sont placés de part et d'autre de la carte électronique CE. En d'autres termes, la carte électronique CE est intercalée entre les premier G1 et second G2 guides de lumière, et chacun des premier G1 et second G2 guides de lumière comprend une face latérale qui est orientée vers l'une des deux faces opposées de la carte électronique CE.

Ces premier G1 et second G2 guides de lumière sont alimentés en photons respectivement par les première et seconde sources de photons et délivrent sur des faces avant (orientées vers l'extérieur) respectivement des photons guidés participant à des première et seconde fonctions photométriques. Par exemple, ils comprennent une face arrière, opposée à leur face avant et recevant les photons de la source de photons associée, et une partie principale, intercalée entre leurs faces arrière et avant et agencée de manière à guider les photons entrants vers la face avant.

De préférence, chacun des premier G1 et second G2 guides de lumière est de type dit « plat » (ou « flat guide »). Ils peuvent, par exemple, être réalisés par moulage d'une matière telle que le poly-méthacrylate de méthyle (ou PMMA).

Par ailleurs, ces premier G1 et second G2 guides de lumière peuvent être solidarisés fixement à la carte électronique CE, qui est solidarisée fixement au boîtier.

Par exemple, chacun des premier G1 et second G2 guides de lumière peut participer à une fonction photométrique qui est choisie parmi une fonction de feu de stop, une fonction de feu de recul, une fonction d'indicateur de changement de direction et une fonction de feu de position latéral (ou feu de gabarit - « side marker »). A titre d'exemple purement illustratif, le premier guide de lumière G1 peut participer à une fonction photométrique de feu de stop, et le second guide de lumière G2 peut participer à une fonction photométrique d'indicateur de changement de direction (ou clignotant).

Le masque MA est délimité par une face avant, orientée vers l'extérieur, et une face arrière FR opposée à la face avant. Par ailleurs, ce masque MA comprend des première O1 et seconde O2 ouvertures qui sont traversées par les premier G1 et second G2 guides de lumière, afin que leurs faces avant soient situées du côté de sa propre face avant. Comme cela apparaît mieux sur la figure 2, ces première O1 et seconde O2 ouvertures sont séparées par une portion de paroi PP ayant sa face arrière FR placée devant un côté (ou tranche) de la carte électronique CE et munie de première N1 et seconde N2 nervures. Comme cela apparaît mieux sur la figure 1, ces première N1 et seconde N2 nervures s'étendent de part et d'autre de la carte électronique CE entre une partie au moins de cette dernière (CE) et une partie au moins des premier G1 et second G2 guides de lumière, afin de limiter des transferts de photons entre ces derniers (G1, G2).

On comprendra en effet que grâce à ces première N1 et seconde N2 nervures certains au moins des photons qui sortent par la face latérale d'un guide de lumière G1 ou G2, orientée vers la carte électronique CE, sont réfléchis sensiblement vers cette même face latérale et donc peuvent de nouveau pénétrer dans ce guide de lumière G1 ou G2, éventuellement après des réflexions multiples. Par conséquent, la probabilité que l'un de ces photons sortis rejoigne une face latérale de l'autre guide de lumière G2 ou G1 et pénètre dans ce dernier est très faible. Il n'y a donc quasiment plus de risque de transfert de photons (ou fuite de lumière) d'un guide de lumière G1 ou G2 vers l'autre G2 ou G1, et donc un observateur situé devant le dispositif d'éclairage DE ne risque pas d'avoir l'impression qu'une fonction photométrique non activée fait l'objet d'un dysfonctionnement tout comme il n'y a plus de risque que la fuite de lumière nuise à l'impression visuelle de qualité du véhicule ou au style recherché. De plus, ces première N1 et seconde N2 nervures empêchent que la carte électronique CE soit au moins partiellement visible de l'extérieur via les première O1 et seconde O2 ouvertures.

On notera, comme illustré non limitativement sur les figures 1 et 2, qu'afin de réduire encore plus le risque précité, il est avantageux que les première N1 et seconde N2 nervures s'étendent de part et d'autre de la carte électronique CE sur toute la longueur des premier G1 et second G2 guides de lumière qui est parallèle à un grand côté de chacune des première O1 et seconde O2 ouvertures.

On notera également qu'afin d'encore réduire le risque précité, il est avantageux que les première N1 et seconde N2 nervures s'étendent de part et d'autre de la carte électronique CE sur toute la hauteur de la partie des premier G1 et second G2 guides de lumière qui est située du côté de la face arrière FR du masque MA.

Comme cela est illustré non limitativement sur la figure 1, la carte électronique CE peut être très avantageusement logée étroitement et partiellement entre les première N1 et seconde N2 nervures afin d'être immobilisée par ces dernières (N1, N2). Pour ce faire, la carte électronique CE peut, par exemple, être emmanchée en force dans un logement LC qui est défini entre les première N1 et seconde N2 nervures. Cette option très avantageuse permet non seulement d'immobiliser fixement la carte électronique CE par rapport au masque MA (ce qui peut permettre d'éviter d'avoir à prévoir un autre mode de fixation dans un boîtier), mais également d'éviter que les vibrations et chocs subis par le véhicule induisent des chocs entre la carte électronique CE et les première N1 et seconde N2 nervures. Cette immobilisation fixe de la carte électronique CE peut se faire par un appui (ou une pression) des première N1 et seconde N2 nervures contre les faces opposées de la carte électronique CE, ce qui nécessite que ces première N1 et seconde N2 nervures soient agencées à cet effet (par exemple en étant légèrement incurvées vers les faces opposées de la carte électronique CE ou en comportant des protubérances). En variante, cette immobilisation fixe de la carte électronique CE peut se faire grâce à des protubérances définies sur cette dernière (CE) et contactant étroitement les première N1 et seconde N2 nervures et/ou au moyen d'éléments (ou d'un revêtement local) en silicone.

On notera également, comme illustré non limitativement sur les figures 1 et 2, que le masque MA peut aussi comprendre sur sa face arrière FR, le long d'une partie au moins du grand côté de chacune des première O1 et seconde O2 ouvertures, une nervure auxiliaire NA qui limite la sortie de photons par la face latérale de l'un des premier G1 et second G2 guides de lumière située devant elle (NA).

On comprendra en effet que grâce à ces première N1 et seconde N2 nervures certains au moins des photons qui sortent par la face latérale d'un guide de lumière G1 ou G2, orientée à l'opposé de la carte électronique CE, sont réfléchis sensiblement vers cette même face latérale et donc peuvent de nouveau pénétrer dans ce guide de lumière G1 ou G2, éventuellement après des réflexions multiples. Par conséquent, la probabilité que l'un de ces photons sortis rejoigne une face latérale de l'autre guide de lumière G2 ou G1 et pénètre dans ce dernier est très faible. De plus, ces nervures auxiliaires NA empêchent qu'une partie de la partie technique soit partiellement visible de l'extérieur via les première O1 et seconde O2 ouvertures.

On notera, comme illustré non limitativement sur les figures 1 et 2, qu'afin de réduire encore plus ce dernier risque il est avantageux que chacune des nervures auxiliaires NA s'étende sur toute la longueur de l'un des grands côtés de chacune des première O1 et seconde O2 ouvertures.

On notera également qu'afin d'encore réduire le risque précité, il est avantageux que chaque nervure auxiliaire NA s'étende sur toute la hauteur de la partie du premier G1 ou second G2 guide de lumière voisin qui est située du côté de la face arrière FR du masque MA.

## Revendications

1. Dispositif d'éclairage (DE) pour un véhicule, ledit dispositif (DE) comprenant i) une carte électronique (CE) sur laquelle sont installées des première et seconde sources de photons, et ii) des premier (G1) et second (G2) guides de lumière placés de part et d'autre de ladite carte électronique (CE), alimentés en photons respectivement par lesdites première et seconde sources de photons et délivrant sur des faces avant respectivement des photons guidés participant à des première et seconde fonctions photométriques, **caractérisé en ce qu'**il comprend en outre un masque (MA) comprenant des première (O1) et seconde (O2) ouvertures traversées par lesdits premier (G1) et second (G2) guides de lumière et séparées par une portion de paroi (PP) ayant une face arrière (FR) placée devant un côté de ladite carte électronique (CE) et munie de première (N1) et seconde (N2) nervures s'étendant de part et d'autre de ladite carte électronique (CE) entre une partie au moins de cette dernière (CE) et une partie au moins desdits premier (G1) et second (G2) guides de lumière, afin de limiter des transferts de photons entre ces derniers (G1, G2).

2. Dispositif d'éclairage selon la revendication 1, **caractérisé en ce que** lesdites première (N1) et seconde (N2) nervures s'étendent de part et d'autre de ladite carte électronique (CE) sur toute une longueur desdits premier (G1) et second (G2) guides de lumière, parallèle à un grand côté de chacune desdites première (O1) et seconde (O2) ouvertures.

3. Dispositif d'éclairage selon la revendication 1 ou 2, **caractérisé en ce que** lesdites première (N1) et seconde (N2) nervures s'étendent de part et d'autre de ladite carte électronique (CE) sur toute une hauteur de la partie des premier (G1) et second (G2) guides de lumière qui est située du côté de ladite face arrière (FR).

4. Dispositif d'éclairage selon l'une des revendications 1 à 3, **caractérisé en ce que** ladite carte électronique (CE) est logée étroitement et partiellement entre lesdites première (N1) et seconde (N2) nervures afin d'être immobilisée par ces dernières (N1, N2).

5. Dispositif d'éclairage selon l'une des revendications 1 à 4, **caractérisé en ce que** ledit masque (MA) comprend sur sa face arrière (FR), le long d'une partie au moins d'un grand côté de chacune desdites première (O1) et seconde (O2) ouvertures, une nervure auxiliaire (NA) limitant une sortie de photons par une face latérale de l'un desdits premier (G1) et second (G2) guides de lumière située devant elle (NA).

6. Dispositif d'éclairage selon la revendication 5, **caractérisé en ce que** chacune desdites nervures auxiliaires (NA) s'étend sur toute une longueur de l'un desdits grands côtés de chacune desdites première (O1) et seconde (O2) ouvertures.

7. Dispositif d'éclairage selon l'une des revendications 1 à 6, **caractérisé en ce que** chacune desdites première et seconde sources de photons comprend au moins une diode électroluminescente.

8. Dispositif d'éclairage selon l'une des revendications 1 à 7, **caractérisé en ce que** chacun desdits premier (G1) et second (G2) guides de lumière est destiné à participer à une fonction photométrique choisie parmi une fonction de feu de stop, une fonction de feu de recul, une fonction d'indicateur de changement de direction et une fonction de feu de position latéral.

9. Bloc optique (BO) destiné à équiper un véhicule et comprenant un boîtier délimitant un espace interne et une glace solidarisée fixement à une partie avant dudit boîtier, **caractérisé en ce qu'**il comprend en outre un dispositif d'éclairage (DE) selon l'une des revendications précédentes, installé dans ledit espace interne.

10. Véhicule, **caractérisé en ce qu'**il comprend au moins un bloc optique selon la revendication 9.

## Patentansprüche

1. Beleuchtungsvorrichtung (DE) für ein Fahrzeug, wobei die Vorrichtung (DE) aufweist: i) eine elektronische Platine (CE), auf der eine erste und eine zweite Photonenquelle installiert sind, und ii) einen ersten (G1) und einen zweiten (G2) Lichtleiter, die zu beiden Seiten der elektronischen Platine (CE) angeordnet sind, von der ersten bzw. der zweiten Photonenquelle mit Photonen versorgt werden und auf Stirnflächen jeweils geführte Photonen abgeben, die an einer ersten und einer zweiten photometrischen Funktion beteiligt sind, **dadurch gekennzeichnet, dass** sie ferner eine Maske (MA) umfasst, die eine erste (O1) und eine zweite (02) Öffnung aufweist, durch die der erste (G1) und der zweite (G2) Lichtleiter verlaufen und die durch einen Wandabschnitt (PP) getrennt sind, der eine Rückseite (FR) aufweist, die vor einer Seite der elektronischen Platine (CE) und versehen mit einer ersten (N1) und einer zweiten (N2) Rippe, die sich auf beiden Seiten der elektronischen Platine (CE) zwischen mindestens einem Teil der letzteren (CE) und mindestens einem Teil des ersten (G1) und des zweiten (G2) Lichtleiters erstrecken, um den Photonentransfer zwischen ihnen zu begrenzen (G1, G2).

2. Beleuchtungsvorrichtung nach Anspruch 1, **dadurch gekennzeichnet, dass** sich die erste (N1) und die zweite (N2) Rippe auf beiden Seiten der elektronischen Platine (CE) über die gesamte Länge des ersten (G1) und des zweiten (G2) Lichtleiters erstrecken, parallel zu einer langen Seite jeder der ersten (O1) und zweiten (02) Öffnungen.

3. Beleuchtungsvorrichtung nach Anspruch 1 oder 2, **dadurch gekennzeichnet, dass** sich die erste (N1) und die zweite (N2) Rippe auf beiden Seiten der elektronischen Platine (CE) über die gesamte Höhe des Teils des ersten (G1) und des zweiten (G2) Lichtleiters erstrecken, der sich auf der Seite der Rückseite (FR) befindet.

4. Beleuchtungsvorrichtung nach einem der Ansprüche 1 bis 3, **dadurch gekennzeichnet, dass** die elektronische Platine (CE) eng und teilweise zwischen der ersten (N1) und der zweiten (N2) Rippe untergebracht ist, um durch letztere (N1, N2) unbeweglich gemacht zu werden.

5. Beleuchtungsvorrichtung nach einem der Ansprüche 1 bis 4, **dadurch gekennzeichnet, dass** die Maske (MA) auf ihrer Rückseite (FR) entlang mindestens eines Teils einer langen Seite sowohl der ersten (O1) als auch der zweiten (02) Öffnung eine Hilfsrippe (NA) aufweist, die den Austritt von Photonen durch eine Seitenfläche des ersten (G1) oder des zweiten (G2) Lichtleiters begrenzt, die sich vor ihr (NA) befindet.

6. Beleuchtungsvorrichtung nach Anspruch 5, **dadurch gekennzeichnet, dass** sich jede der Hilfsrippen (NA) entlang einer Länge einer der Längsseiten jeder der ersten (O1) und zweiten (02) Öffnungen erstreckt.

7. Beleuchtungsvorrichtung nach einem der Ansprüche 1 bis 6, **dadurch gekennzeichnet, dass** jede der ersten und zweiten Photonenquellen mindestens eine Leuchtdiode umfasst.

8. Beleuchtungsvorrichtung nach einem der Ansprüche 1 bis 7, **dadurch gekennzeichnet, dass** jeder der ersten (G1) und zweiten (G2) Lichtleiter dazu bestimmt ist, an einer photometrischen Funktion teilzunehmen, die aus einer Bremslichtfunktion, einer Rückfahrlichtfunktion, einer Fahrtrichtungswechselanzeigefunktion und einer Seitenmarkierungslichtfunktion ausgewählt ist.

9. Optische Einheit (BO), die dazu bestimmt ist, ein Fahrzeug auszurüsten, und die ein Gehäuse, das einen Innenraum begrenzt, und eine Linse umfasst, die fest mit einem vorderen Teil des Gehäuses verbunden ist, **dadurch gekennzeichnet, dass** sie außerdem eine Beleuchtungsvorrichtung (DE) nach einem der vorhergehenden Ansprüche umfasst, die in dem Innenraum installiert ist.

10. Fahrzeug, **dadurch gekennzeichnet, dass** es mindestens eine optische Einheit nach Anspruch 9 umfasst.

## Claims

1. Lighting device (DE) for a vehicle, the said device (DE) comprising i) an electronic board (CE) on which are installed first and second photon sources, and ii) first (G1) and second (G2) light guides placed on either side of the said electronic board (CE), supplied with photons respectively by the said first and second photon sources and delivering on front faces respectively guided photons participating in first and second photometric functions, **characterized in that** it further comprises a mask (MA) comprising first (01) and second (O2) openings through which said first (G1) and second (G2) light guides pass and which are separated by a wall portion (PP) having a rear face (FR) placed in front of a side of said electronic board (CE) and provided with first (N1) and second (N2) ribs extending on either side of said electronic board (CE) between at least part of the latter (CE) and at least part of said first (G1) and second (G2) light guides, in order to limit photon transfers between them (G1, G2).

2. Lighting device according to claim 1, **characterized in that** said first (N1) and second (N2) ribs extend on either side of said electronic board (CE) over a whole length of said first (G1) and second (G2) light guides, parallel to a long side of each of said first (01) and second (O2) openings.

3. Lighting device according to claim 1 or 2, **characterized in that** said first (N1) and second (N2) ribs extend on either side of said electronic board (CE) over the entire height of the part of the first (G1) and second (G2) light guides which is located on the side of said rear face (FR).

4. Lighting device according to one of claims 1 to 3, **characterized in that** said electronic board (CE) is closely and partially housed between said first (N1) and second (N2) ribs in order to be immobilized by the latter (N1, N2).

5. Illumination device according to one of claims 1 to 4, **characterized in that** said mask (MA) comprises on its rear face (FR), along at least part of a long side of each of said first (01) and second (O2) openings, an auxiliary rib (NA) limiting an exit of photons through a side face of one of said first (G1) and second (G2) light guides located in front of it (NA).

6. A lighting device according to claim 5, **characterized in that** each of said auxiliary ribs (NA) extends along a length of one of said long sides of each of said first (01) and second (O2) openings.

7. Illumination device according to one of claims 1 to 6, **characterized in that** each of said first and second photon sources comprises at least one light-emitting diode.

8. A lighting device according to one of claims 1 to 7, **characterized in that** each of said first (G1) and second (G2) light guides is intended to participate in a photometric function selected from a stop light function, a reversing light function, a direction change indicator function and a side-marker light function.

9. Optical unit (BO) intended to equip a vehicle and comprising a housing delimiting an internal space and a lens fixedly attached to a front part of the said housing, **characterised in that** it further comprises a lighting device (DE) according to one of the preceding claims, installed in the said internal space.

10. Vehicle, **characterized in that** it comprises at least one optical unit according to claim 9.
